# EUROPÄISCHE PATENTSCHRIFT

(11) **EP 1 234 283 B1**
(45) Veröffentlichungstag und Bekanntmachung des Hinweises auf die Patenterteilung: **09.06.2004**
(21) Anmeldenummer: 00993194.0
(22) Anmeldetag: 27.11.2000
(51) Int. Cl.: G07F 7/10, H03K 21/40

(54) **VERFAHREN UND ANORDNUNG ZUM BETREIBEN EINES MEHRSTUFIGEN ZÄHLERS IN EINER ZÄHLRICHTUNG**
METHOD AND ARRANGEMENT FOR OPERATING A MULTI-STAGE COUNTER IN A COUNTING DIRECTION
PROCEDE ET DISPOSITIF D'EXPLOITATION D'UN COMPTEUR A PLUSIEURS ETAGES, DANS UN SENS DE COMPTAGE

(30) Priorität: 29.11.1999 EP 99123705
(43) Veröffentlichungstag der Anmeldung: 28.08.2002
(73) Patentinhaber: Infineon Technologies AG, 81669 München (DE)
(72) Erfinder: ALLINGER, Robert, 82008 Unterhaching (DE); POCKRANDT, Wolfgang, 85293 Reichertshausen (DE)
(74) Vertreter: Epping Hermann & Fischer
(86) Internationale Anmeldenummer: PCT/DE2000/004213
(87) Internationale Veröffentlichungsnummer: WO 2001/039144

(56) Entgegenhaltungen:
- EP-A- 0 268 106
- EP-A- 0 292 658
- WO-A-97/21197
- WO-A-97/45815
- GB-A- 2 187 011

## Beschreibung

Die Erfindung betrifft ein Verfahren und eine Anordnung zum Betreiben eines mehrstufigen Zählers in einer Zählrichtung.

Heutzutage sind beliebig viele Anwendungsgebiete bekannt, bei denen eine Ereigniszählung stattfinden soll. Diese Ereignisse kann die Häufigkeit der Benutzung eines Gerätes, das Passieren von Personen oder Fahrzeugen oder Gegenständen, die Erfassung eines Telefonzähltaktes, aber auch die Erfassung einer Fahrleistung, sprich Kilometerzähler bei einem PKW oder Betriebsstundenzähler eines beliebigen Gerätes und nicht zuletzt die erfaßte Arbeitszeit bzw. Anwesentheitszeit eines Arbeitnehmers an seinem Arbeitsplatz sein. All diese Fälle sind dadurch gekennzeichnet, daß sie mit möglichst hoher Genauigkeit erfaßt werden, d. h. das in der Regel ein hoher Wertebereich von Zählwerten abgedeckt wird. Weiterhin ist bei den genannten Fällen in der Regel der Wunsch vorhanden, daß das Zählergebnis nicht manipulierbar, d. h. nicht rücksetzbar ist. Eine derartige Forderung läßt sich sicher mit einem einstufigen Zähler realisieren, der nur von seinem bisherigen Zählerstand aus aufwärts oder abwärts zählen kann. Dies läßt sich einfach beispielsweise mittels eines EEPROM realisieren, wobei dann für jeden Zählwert eine EEPROM-Zelle vorzusehen ist, und daß EEPROM entweder nur beschreibbar oder nur löschbar ist, je nachdem ob eine Aufwärts- oder Abwärtszählung vorgesehen ist.

Für die zuerst genannte Forderung, daß nämlich ein möglichst großer Wertebereich vom Zähler zu erfassen ist, führt dann zu dem Ergebnis, daß bei einer solchen Realisierung ein EEPROM-Speicher mit entsprechend vielen Speicherzellen vorzusehen ist. In Zahlen ausgedrückt heißt dies, daß zum Beispiel zum Erreichen eines maximalen Zählerstandes von 255 genau 255 Zählerzellen benötigt werden. Nunmehr ist es jedoch heutzutage üblich, derartige Anordnungen möglichst klein aufzubauen. Die Verwendung eines mehrstufigen Zählers mit 8 Bit, d. h. 8 Zählerzellen führt ebenfalls zu einem maximalen Zählerstand von 255. Ein derartiger mehrstufiger Zähler (8-Bit-Binärzähler) weist jedoch den Nachteil auf, daß bei einer Veränderung der nächsten Zählerstelle die vorangegangene Zählerstelle zurückgesetzt wird. Dies führt dazu, daß die Realisierung eines mehrstufigen Zählers, der nur in einer Richtung zählt und gleichzeitig nicht manipulierbar ist, nur sehr schwer realisierbar ist.

In der GB-A-2 187 011 ist ein mechanisch mit Zählrädern betriebener Gaszähler beschrieben, der einen aufgrund einer vollen Umdrehung eines Zählrades generierten elektrischen Impuls an eine funkferngesteuerte Gaszählereinheit überträgt, die diese Impulse zählt und einen dem Gaszähler entsprechenden Zählwert abbildet. Eine Kodiervorrichtung des Gaszählers kodiert den Zählwert des niederwertigsten Zählrades und übermittelt diese Information an die funkferngesteuerte Gaszählereinheit, die die Information mit ihrem Zählwert vergleicht und bei Unstimmigkeiten eine Korrektur vornimmt.

Aus der EP 0 321 727 ist eine Schaltungsanordnung beschrieben, bei der mehrere EEPROM-Zellen in einer Reihe angeordnet sind. Dabei sind wiederum mehrere Reihen zusammengeschaltet sind. Die Speicherzellen jeweils einer Reihe stellen ein einheitliches Wertigkeitsniveau dar, wobei die Speicherinhalte einer Reihe, mittels einer logischen Überwachung nur dann löschbar sind, wenn ein Übertrag in die nächst höhere Reihe erfolgt ist. Die in dieser Druckschrift offenbarte Anordnung weist genau die zuvor erläuterten Nachteile der Manipulierbarkeit auf, indem durch Einflußnahme auf die logische Schaltung das unidirektionale Zählen nicht mit Sicherheit gewährleistet ist. Eine ähnliche nur etwas aufwendiger gestaltete Anordnung ist in der EP 0 618 591 ausgeführt, wobei für jede nächst höhere Reihe zum Umschreiben eine Hilfsspeicherzelle vorgesehen ist, die programmierbar und auch wieder löschbar ist, wobei auch diese Anordnung leicht manipulierbar ist, da die Hilfsspeicherzellen sowohl schreib- als auch löschbar sind.

Aus der US 5,264,689 ist eine aufladbare Telefonkarte bekannt, die einen Kreditoren-Zähler und einen Debitoren-Zähler aufweist. Im Kreditoren-Zähler wird beim Aufladen der Karte ein maximaler Zählwert eingestellt. Mit jeder verbrauchten Einheit wird eine Speicherzelle umprogrammiert und der Debitorenzähler erhöht. Sobald der Zählstand vom Debitoren- und Kreditoren-Zähler gleich ist, gilt die Karte als "leer". Es muß nun zum Aufladen der Karte erst der Kreditoren-Zähler erhöht werden. Zum Verhindern einer mißbräuchlichen Benutzung sind beide Zähler nicht rücksetzbar. Dies hat zur Folge, daß beim Erreichen des Maximalwertes der Zähler die Karte nicht weiter benutzbar ist.

Der Erfindung liegt somit die Aufgabe zugrunde, ein Verfahren bzw. eine Schaltungsanordnung zum Betreiben eines mehrstufigen Zählers vorzusehen, bei dem auf einfache Weise die Manipulationssicherheit erhöht ist.

Diese Aufgabe wird erfindungsgemäß mit den in Patentanspruch 1 bzw. 5 angegebenen Maßnahmen gelöst.

Durch das gleichzeitige Betreiben eines einstufigen Zählers, der nur entweder aufwärts oder abwärts zählt neben dem mehrstufigen Zähler, der das eigentliche Ereignis zählt, ist über einen Vergleich sichergestellt, daß der Zählwert des mehrstufigen Zählers zumindest in der Größenordnung, mit dem Zählwert des einstufigen Zählers übereinstimmt. Durch das Verknüpfen des Zählwertes des einstufigen Zählers mit Zusatzdaten zu ersten Autentitätssdaten wird beim Auswerten der weitergeleiteten Autentitätsdaten der Zählwert des einstufigen Zählers für die Öffentlichkeit unbemerkt zur Verfügung gestellt und steht zur Ermittlung der Autentität zur Verfügung. Damit ist mit einfachen Mitteln die Möglichkeit zur Manipulation beseitigt, da nicht nur ein feststehendes Schlüsselwort, und/oder eine zuvor von der Überprüfungsvorrichtung übermittelte Zufallszahl, sondern auch der sich entsprechend der Granularität des Hilfszählers verändernde Zählwert dieses Hilfszählers zur Autentitätsüberprüfung zur Verfügung steht.

Weiter wird dies dadurch verbessert, daß eine zusätzliche Verknüpfung mit dem Zählwert des mehrstufigen Zählers erfolgt.

Eine weitere Verbesserung ergibt sich dadurch, daß ein Teil der Zusatzdaten eine zuvor von der Überprüfungsvorrichtung übermittelte Zufallszahl ist.

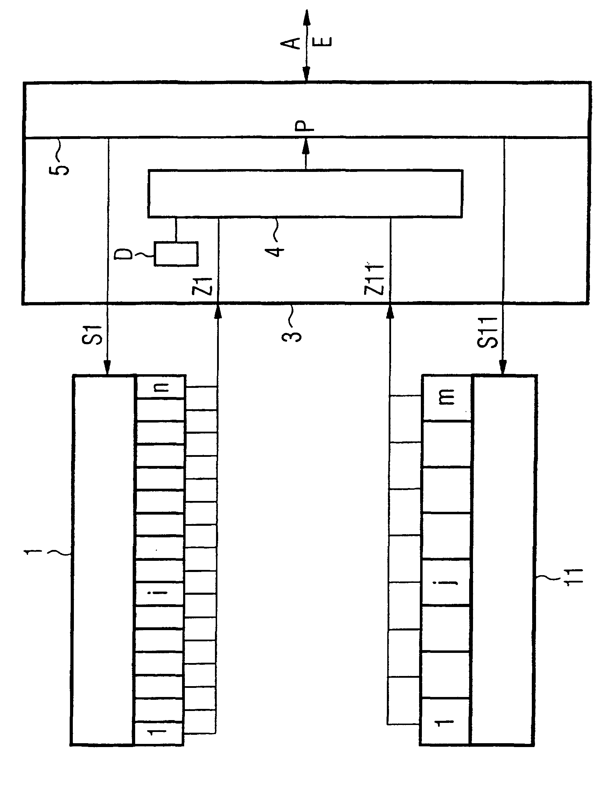

Nachfolgend wird die Erfindung unter Bezugnahme auf die Figur beschrieben, wobei ein Ausführungsbeispiel in Form eines Blockschaltbildes dargestellt ist.

Das in der Figur dargestellte Ausführungsbeispiel weist einen m-stufigen Zähler 11 mit m = 8 auf. Dieser ist in der Darstellung als 8-Bit-Binärzähler zu verstehen. Der Zähler 11 kann somit von 0 bis 255 zählen, d. h. 256 Zählstellen. Der Zähler 11 ist mit einer Steuereinheit 3 verbunden, die dem Zähler 11 ein Zählsignal S11 zuführt. Mit jedem Zuführen des Zählsignals S11 wird der Zähler 11 um 1 verändert, wobei die Veränderung in gleicher Richtung wie eine vorangegangene Änderung erfolgt. Das bedeutet, daß der in der Figur symbolisch dargestellte Zähler 11 derart gestaltet ist, daß er entweder aufwärts oder nur abwärts zählt. Der jeweilige Zählerstand des mehrstufigen Zählers 11 wird als Zählwertsignal Z11 einer Prüflogik 4 zugeführt. Weiterhin ist ein einstufiger Zähler 1 vorgesehen, der bei diesem Ausführungsbeispiel n-Zellen mit n = 16 aufweist. Dieser in der Figur symbolisch dargestellte Zähler ist so aufgebaut, daß er ebenfalls nur in einer Zählrichtung zählt, nämlich von 0 bis 15, d. h. 16 Zählstellen. Der einstufige Zähler 1 erhält von der Steuereinheit 3 ein Zählsignal S1, worauf er um einen Zählwert weitergesetzt wird. Der Zählstand des einstufigen Zählers 1 wird in der Steuereinheit 3 als Kontrollzählwertsignal Z1 der Prüflogik 4 zugeführt. Die Prüflogik 4 vergleicht das Zählwertsignal Z11 mit dem Kontrollzählwertsignal Z1 und gibt über einen Anschluß P ein in Abhängigkeit vom Vergleich bestimmtes Signal an eine Zählersteuerung 5 ab.

Die beiden Zähler 11 und 1 sind als EEPROM-Zellen ausgebildet. Hierbei ist vorgesehen, daß entsprechend dem bekannten Betreiben eines Binärzählers die einzelnen Speicherzellen gemäß den Regeln des Aufwärts- oder Abwärtszählen beschrieben oder gelöscht werden. Genauso ist auch der einstufige Kontrollzähler 1 aus EEPROM-Zellen zusammengesetzt, wobei die einzelnen Zellen 1 bis n nacheinanderfolged, nur beschrieben oder nur gelöscht werden.

Die Prüflogik 4 ist mit einem Datenspeicher D verbunden, in dem Zusatzdaten abgespeichert sind. Beim Autentifizieren der Anordnung verknüpft die Prüflogik 4 die Zusatzdaten mit dem Zählwert des einstufigen Zählers 1 und erzeugt damit erste Autentitätsdaten. Die Zusatzdaten setzen sich idealerweise aus einem Schlüsselwort und einer zuvor von einer nicht dargestellten Überprüfungsvorrichtung übermittelten Zufallszahl zusammen.

Wird die Anordnung über den Eingang E von der Überprüfungsvorrichtung aufgefordert, sich zu autentifizieren, so werden die Autentitätsdaten durch Verknüpfung des Zählwertes des Hilfszählers 1 mit den Zusatzdaten erzeugt und über einen Ausgang A von der Steuereinheit 3 abgegeben. Gleichzeitig ermittelt die Steuereinheit 3 den Zählwert des mehrstufigen Zählers 11 und überträgt diesen ebenfalls über den Ausgang A zur Überprüfungsvorrichtung. Zur Autentitätsüberprüfung wird der Zählwert des Hilfszählers in der nicht dargestellten Überprüfungsvorrichtung, die die Autentität überprüfen will, ermittelt bzw. rückgewonnen und daraus zweite Autentitätsdaten erzeugt. Die Autentität liegt vor, wenn die zweiten Autentitätsdaten mit den ersten Autentitätsdaten übereinstimmen. Liegt keine Autentität vor, wir der Datenaustausch mit der Anordnung abgebrochen. Die Zeiten Autentitätsdaten ergeben sich durch die Verknüpfung des rückgewonnen Zählwertes des Hilfszählers 1 mit den Zusatzdaten, die soweit sie der Überprüfungsvorrichtung nicht bekannt sind ebenfalls über den Ausgang A übertragen werden.

Als Abwandlung ist es auch denkbar, wenn die Zufallszahl nicht von der Überprüfungsvorrichtung vorgegeben wird sondern von derzu überprüfenden Anordnung. In diesem Fall muß aber die Zuafallszahl ein Teil der Übermittelten Zusatzdaten sein, was im vorrangegangenen Beispiel nicht der Fall war, da hier die zweiten Autentitätsdaten mit der vorher vorgegebenen Zufallszahl und den übertragenen Zusatzdaten erzeugt wurden, sofern diese nicht von der Überprüfungsvorrichtung bekannt waren.

Als weitere Ausgestaltung ist es möglich, auch den Zählwert des mehrstufigen Zählers 11 mit den ersten Autentitätsdaten zu verknüpfen. Analog zu dem zuvor Beschriebenen muß dies dann auch in der Überprüfungsvorrichtung zur Erzeugung der zweiten Autentitätsdaten erfolgen, wobei der Zählwert des mehrstufigen Zählers nicht rückgewonnen werden, da er öffentlich bekannt, der Überprüfungsvorrichtung übermittelt wird.

Ist die Autentität sicher festgestellt, erfolgt der weitere typische Betrieb der in der Figur dargestellten. Grundsätzlich ist vorgesehen, daß mit jedem Eingabesignal am Eingang E von der Steuereinheit 3 ein Zählsignal S11 abgegeben werden soll. Dabei werden zuvor von der Prüflogik 4 die Zählerstände der beiden Zähler 1 und 11 mittels des Zählwertsignals Z11 und des Kontrollzählwertsignal Z1 überprüft. Sind beide beispielsweise 0, stellt die Prüflogik 4 fest, daß die Übereinstimmung besteht und läßt über das Prüfsignal P zu, daß über die Zählersteuerung 5 das Zählsignal 11 ausgegeben wird.

Nunmehr ist vorgesehen, daß beide Zähler von 0 bis 255 zählen. Das bedeutet, daß der einstufige Kontrollzähler 1 bei jedem sechzehnten Zählsignal S11, das an den mehrstufigen Zähler 11 geht ebenfalls von der Zählersteuerung 5 in der Steuereinheit 3 ein Kontrollzählsignal S1 erhält. Für den unmanipulierten Betrieb ist die Prüflogik nunmehr so ausgelegt, daß sie überwacht, daß der Zählwert des Zählers 11 zu dem gerade erreichten Zählwert des Kontrollzählers 1 paßt. D. h. bei dem dargestellten Ausführungsbeispiel darf der Zählwert des Zählers 11 nicht kleiner als (i x 16) - 1 sein. Entsprechendes gilt für eine abwärts zählende Anordnung, auch hier muß der Zähler 11 entsprechend der Zähllogik sich in einem zum Zählwert des Kontrollzählers 1 passenden Bereich befinden.

Sobald die Prüflogik 4 keine Übereinstimmung feststellt, wird ein Fehlersignal über den Anschluß P abgegeben.

Die Erfindung ist jedoch nicht auf das in der Figur dargestellte Ausführungsbeispiel beschränkt. Vielmehr ist auch vorstellbar, daß insbesondere bei einem sehr großen zu überschreitenden Zählwertebereich des Zählers 11 zum Einsparen von Zählerzellen des einstufigen Zählers, dieser nicht linear betrieben wird, sondern beispielsweise dekadisch. D. h. der einstufige Zähler würde beispielsweise beim 10., 100., 1000. usw. ein Zählsignal S11 von der Zählersteuerung 5 ein Kontrollzählsignal S1 erhalten. Zur Überwachung des unmanipulierten Betriebes muß die Prüflogik 4 entsprechend aufgebaut sein, d. h. in einem solchen Fall muß der Zählwert des Zählers 11 der dem jeweiligen Zählwert des Kontrollzählers 1 zugeordneten Größenordnung entsprechen. Genauso gut ist vorstellbar, daß der Zusammenhang zwischen dem Zähler des Zählers 11 und dem Zählwert des Kontrollzählers 1 einer logarithmischen, exponentiellen oder beliebig anderen geeigneten und gewünschten Funktionen entspricht. Dies ist dann sowohl auf aufwärtszählende als auch auf abwärtszählende Zähleranordnungen anwendbar.

Abschließend sei darauf hingewiesen, daß der Zähler 11 und der Kontrollzähler 1 nicht zwangsläufig in der gleichen Richtung zählen müssen. Vielmehr kann auch vorgesehen sein, daß der eine Zähler aufwärts und der jeweils andere Zähler abwärts zählt. Die alleinige Voraussetzung für einen unmanipulierten Betrieb ist, daß der Kontrollzähler nur in einer Richtung zählt und die Prüflogik 4 derart aufgebaut ist, daß der Zählwert des Zählers 11 mit dem Zählwert des Kontrollzählers 1 einen logischen Zusammenhang aufweist.

## Patentansprüche

1. Verfahren zum Betreiben eines mehrstufigen Zählers (11) in nur einer Zählrichtung, wobei der Zählwert eines einstufigen nur in einer Zählrichtung veränderbaren Hilfszählers (1) bei vorbestimmten Zielwertzuständen des mehrstufigen Zählers (11) verändert wird und die Zählwertzustände des mehrstufigen Zählers (11) und des einstufigen Zählers (1) erfasst werden,
**gekennzeichnet, durch**
- Verknüpfen des Zählwertzustandes des Hilfszählers (1) mit Zusatzdaten zu ersten Authentitätsdaten,
- Übertragen der ersten Authentitätsdaten zusammen mit dem Zählwert des mehrstufigen Zählers (11) zu einer Überprüfungsvorrichtung (4),
- Rückgewinnung des Zählwertes des Hilfszählers (1) in der Überprüfungsvorrichtung (4),
- Erzeugung von zweiten Authentitätsdaten **durch** Verknüpfung des rückgewonnenen Zählwertes des Hilfszählers (1) mit den Zusatzdaten und
- Vergleich der ersten Authentitätsdaten mit den zweiten Authentitätsdaten.

2. Verfahren nach Anspruch 1,
**dadurch gekennzeichnet, daß**
der Zählwert des mehrstufigen Zählers (11) zusätzlich zu den Authentitätsdaten verknüpft wird.

3. Verfahren nach einem der vorhergehenden Ansprüche,
**dadurch gekennzeichnet, daß**
von der Überprüfungsvorrichtung (4) eine Zufallszahl zum Bilden der Zusatzdaten übertragen wird.

4. Schaltungsanordnung zum Durchführen des Verfahrens nach einem der Ansprüche 1 bis 3, mit einem mehrstufigen nur aufwärts oder abwärts zählenden Zählers (11), bei dem der Zählwert einer Stufe beim Verändern eines Zählwertes der nachfolgenden Stufe auf einen Anfangswert zurückgesetzt wird,
einem einstufigen Hilfszähler (1) der nur aufwärts oder nur abwärts zählend betreibbar ist, und der bei vorbestimmten Zählwerten des mehrstufigen Zählers (11) verändert wird,
**gekennzeichnet durch** eine Verknüpfungseinrichtung (4), die mit dem Hilfszähler (1) und einem Datenspeicher (D) derart verbunden ist, daß die Verknüpfungseinrichtung (4) **durch** Verknüpfen des Zählwertes des Hilfszählers (11) mit Zusatzdaten des Datenspeichers (D) Authentitätsdaten erzeugt.

5. Schaltungsanordnung nach Anspruch 4,
**dadurch gekennzeichnet,**
**daß** ein Teil der Zusatzdaten ein Schlüsselwort sind und/oder daß ein Teil der Zusatzdaten eine Zufallszahl sind.

## Claims

1. Method for operating a multistage counter (11) in only one counting direction, the counting value of a single-stage auxiliary counter (1) which can be changed in only one counting direction being changed in predetermined target value states of the multistage counter (11) and the counting value states of the multistage counter (11) and of the single-stage counter (1) being registered, **characterized by**
- logically linking the counting value state of the auxiliary counter (1) to supplementary data to form first authenticity data,
- transmitting the first authenticity data, together with the counting value of the multistage counter (11), to a checking device (4),
- recovering the counting value of the auxiliary counter (1) in the checking device (4),
- generating second authenticity data by logically linking the recovered counting value of the auxiliary counter (1) to the supplementary data,
- comparing the first authenticity data with the second authenticity data.

2. Method according to Claim 1, **characterized in that** the counting value of the multistage counter (11) is additionally logically linked to the authenticity data.

3. Method according to one of the preceding claims, **characterized in that** a random number is transmitted by the checking device (4) to form the supplementary data.

4. Circuit arrangement for carrying out the method according to one of Claims 1 to 3, having a multistage counter (11) which only increments or decrements and in which the counting value of a stage is reset to an initial value when a counting value of the following stage changes,
a single-stage auxiliary counter (1) which can be operated only in an incrementing fashion or only in a decrementing fashion and which is changed at predetermined counting values of the multistage counter (11),
**characterized by** a logic linking device (4) which is connected to the auxiliary counter (1) and to a data store (D) in such a way that the logic linking device (4) generates authenticity data by logically linking the counting value of the auxiliary counter (11) to supplementary data of the data store (D).

5. Circuit arrangement according to Claim 4, **characterized in that** a part of the supplementary data is a keyword and/or **in that** a part of the supplementary data is a random number.

## Revendications

1. Procédé d'exploitation d'un compteur (11) à plusieurs étages dans un seul sens de comptage, la valeur de comptage d'un compteur (1) auxiliaire à un étage, modifiable dans un seul sens de comptage, étant modifiée dans des états prescrits de valeur cible du compteur (11) à plusieurs étages et les états de valeur de comptage du compteur (11) à plusieurs étages et du compteur (1) à un étage étant enregistrés,
**caractérisé par** les étapes suivantes
- liaison logique de l'état de valeur de comptage du compteur (1) auxiliaire à des données supplémentaires, pour former des premières données d'authenticité,
- transmission des premières données d'authenticité conjointement. avec la valeur de comptage du compteur (11) à plusieurs étages à un dispositif (4) de contrôle,
- récupération de la valeur de comptage du compteur (1) auxiliaire dans le dispositif (4) de contrôle,
- production de deuxièmes données d'authenticité par liaison logique de la valeur de comptage récupérée du compteur (1) auxiliaire aux données supplémentaires, et
- comparaison des premières données d'authenticité et des deuxièmes données d'authenticité.

2. Procédé suivant la revendication 1, **caractérisé en ce que** la valeur de comptage du compteur (11) à plusieurs étages est en outre liée logiquement aux données d'authenticité.

3. Procédé suivant l'une des revendications précédentes, **caractérisé en ce qu'**un nombre aléatoire est transmis par le dispositif (4) de contrôle pour former les données supplémentaires.

4. Circuit pour la mise en oeuvre du procédé suivant l'une des revendications 1 à 3, comportant un compteur (11) à plusieurs étages à comptage uniquement progressif ou dégressif, suivant lequel la valeur de comptage d'un étage est remise à une valeur initiale en cas de modification d'une valeur de comptage de l'étage suivant,
et comportant un compteur (1) auxiliaire à un étage qui peut être exploité uniquement en comptage progressif ou uniquement en comptage dégressif, et qui est modifiée à des valeurs de comptage prescrites du compteur (11) à plusieurs étages,
**caractérisé par** un dispositif (4) de liaison logique qui est relié au compteur (1) auxiliaire et à une mémoire (D) de données de telle sorte que le dispositif (4) de contrôle produit des données d'authenticité par liaison logique de la valeur de comptage du compteur (1) auxiliaire à des données supplémentaires de la mémoire (D) de données.

5. Circuit suivant la revendication 4, **caractérisé en ce qu'**une partie des données supplémentaires consiste en un mot clé, et/ou **en ce qu'**une partie des données supplémentaires consiste en un nombre aléatoire.
